(19) Europäisches Patentamt
European Patent Office
Office européen des brevets

(11) **EP 2 885 195 B1**

(12) **FASCICULE DE BREVET EUROPEEN**

(45) Date de publication et mention de la délivrance du brevet:
**11.10.2017 Bulletin 2017/41**

(21) Numéro de dépôt: **13747477.1**

(22) Date de dépôt: **22.07.2013**

(51) Int Cl.:
**B62D 15/02** *(2006.01)* **B60W 50/14** *(2012.01)*
**B60W 30/06** *(2006.01)*

(86) Numéro de dépôt international:
**PCT/FR2013/051765**

(87) Numéro de publication internationale:
**WO 2014/027154 (20.02.2014 Gazette 2014/08)**

(54) **STRATEGIE DE PARKING AUTOMATIQUE EN CRENEAU**

STRATEGIE ZUM AUTOMATISCHEN PARALLEL-EINPARKEN

STRATEGY FOR AUTOMATIC PARALLEL PARKING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.08.2012 FR 1257793**

(43) Date de publication de la demande:
**24.06.2015 Bulletin 2015/26**

(73) Titulaire: **Renault S.A.S.**
**92100 Boulogne-Billancourt (FR)**

(72) Inventeurs:
• **VOROBIEVA, Héléna**
**F-92210 Saint-Cloud (FR)**
• **MINOIU ENACHE, Nicoleta**
**F-78000 Versailles (FR)**
• **GLASER, Sébastien**
**F-78330 Fontenay-le-Fleury (FR)**

(56) Documents cités:
**EP-A1- 2 234 085       DE-A1-102005 037 468**
**DE-A1-102010 001 288   US-A1- 2010 332 080**

**Description**

La présente invention concerne le domaine des aides au parking pour véhicules automobiles, et plus particulièrement des systèmes d'aide au parking entièrement automatique pour la réalisation de manoeuvres de parking de type créneau.

La réalisation des manoeuvres de créneau est souvent une source de stress, par la difficulté de réalisation de ces manoeuvres, pouvant être liée à l'appréciation de différents paramètres de réalisation de ces manoeuvres que sont notamment, l'adéquation de la place de stationnement avec la longueur du véhicule, le positionnement initial du véhicule, l'enchaînement des manoeuvres de stationnement,... pouvant également entraîner des risques de dégradation du véhicule en manoeuvre et des véhicules bordant la place de parking visée.

De plus, l'immobilisation temporaire de la voie de circulation est également une source de stress par la gêne occasionnée pour les autres automobilistes.

Ainsi, des dispositifs semi-automatiques d'aide aux manoeuvres de créneau pour le parcage des véhicules sont apparus dans le but de faciliter cette opération. Ces dispositifs sont basés sur des méthodes de planification de la trajectoire qui peuvent se diviser en plusieurs groupes :

- Méthodes basées sur l'utilisation de fonctions de référence. Par exemple, il peut s'agir d'utiliser la fonction de Lyapunov pour stabiliser le véhicule sur une ligne correspondant à la place de parking puis sur un point précis de la place de parking. Il peut également s'agir d'utiliser des fonctions sinusoïdales avec différents gains pour converger vers une trajectoire d'entrée dans la place de parking. Pour ces méthodes le comportement du véhicule est essentiellement dépendant des paramètres choisis et l'inconvénient de ces méthodes est le risque de ne pas converger vers une trajectoire réalisable par le véhicule dans l'espace imparti.

- Méthodes basées sur la logique floue à partir de l'apprentissage du comportement humain. Ces méthodes ne nécessitent pas de planification de trajectoire mais elles sont limitées à l'expérience d'experts humains et sont difficilement généralisables.

- Méthodes de planification en deux étapes : d'abord un chemin sans collision est créé sans prendre en compte les contraintes du véhicule, puis des subdivisions de ce chemin en points sont mises en place jusqu'à ce que tous les points puissent être reliés par des chemins réalisables par le véhicule.
- Méthodes géométriques qui se basent sur des arcs de cercles réalisables par le véhicule sans collision et qui amènent le véhicule dans sa place de parking. Les trajectoires résultant de ces méthodes peuvent simplement s'exprimer à partir d'équations géométriques.

Il est par exemple connu, par le document US2009/0260907, une automatisation du braquage pour une manoeuvre d'entrée de parking en créneau en une ou deux manoeuvres selon la longueur de la place disponible par rapport aux dimensions du véhicule à garer. Il s'avère, en conséquence, que cette longueur minimale de la place de parking est importante, ce qui engendre une contrainte forte sur la place de parking libre et peut provoquer, dans le cas où la place est jugée trop petite, une contrariété chez le conducteur de voir le système refuser une telle place de parking alors que lui-même estime la place suffisante, moyennant plusieurs manoeuvres. Le conducteur se trouve donc obligé d'assurer lui-même ces manoeuvres pénibles de parking qui sont justement celles dont il souhaiterait se décharger.

De plus, ces stratégies de parking en une ou deux manoeuvres nécessitent que le véhicule soit correctement positionné pour débuter la manoeuvre, c'est-à-dire qu'il soit parallèle à la place de stationnement, et à une distance bien définie par rapport aux calculs géométriques de réalisation de la manoeuvre (arcs de cercle correspondant au braquage maximal du véhicule). Il est également connu, par le document US 2010/332080 considéré comme l'art antérieur le plus proche, la réalisation de manoeuvres de parking de manière semi-automatique, le conducteur restant à bord du véhicules, où plusieurs manoeuvres de type créneau sont possibles.

L'un des buts de l'invention est ainsi de proposer une stratégie de parking permettant d'amener un véhicule dans une place libre dès l'instant où l'emplacement libre permet de contenir la voiture, compte tenu des manoeuvres nécessaires pour amener le véhicule dans ladite place.

Un autre but de l'invention est de prévenir le conducteur des possibilités de parking lorsqu'une place libre est localisée.

Un autre but de l'invention est de présenter une manoeuvre entièrement automatique, où le conducteur n'intervient pas dans les manoeuvres de stationnement, le véhicule pouvant même être inoccupé lors des manoeuvres.

La présente invention est atteinte par un procédé d'aide au parking d'un véhicule depuis une voie de circulation vers un emplacement libre de parking, par une ou des manoeuvres de type créneau, comprenant les étapes suivantes :

- détermination de la longueur de l'emplacement libre,

- détermination d'une trajectoire optimale de déplacement du véhicule par des arcs de cercle successifs,

caractérisé en ce qu'il comporte une étape de détermination du nombre de manoeuvres nécessaires pour amener le véhicule dans la place de parking et en ce que ces manoeuvres sont mises en oeuvre lorsque ce nombre de manoeuvres est inférieur à un seuil, ce seuil étant augmenté lorsqu'aucun occupant du véhicule n'est présent à l'intérieur du véhicule lors des manoeuvres.

Selon d'autres caractéristiques complémentaires :

- le procédé comporte une étape d'information au conducteur du nombre de manoeuvres à réaliser, ainsi qu'une étape de validation par le conducteur dudit nombre de manoeuvres à effectuer, les manoeuvres étant mises en oeuvre après la validation par le conducteur,

- la première manoeuvre consiste en un premier arc de cercle amenant le véhicule à l'intérieur de l'emplacement libre et en un deuxième arc de cercle ramenant le véhicule parallèle avec un angle de braquage maximal,

- les manoeuvres ultérieures consistent en des allers-retours d'un bord à l'autre de l'emplacement libre, le véhicule étant dirigé vers l'intérieur de l'emplacement libre sur une première partie du trajet puis ramené parallèlement à l'emplacement libre sur une seconde partie du trajet.

D'autres caractéristiques et avantages de l'invention apparaîtront mieux à la lecture de la description suivante, en référence aux figures annexées parmi lesquelles :

- la figure 1 est une représentation d'un véhicule et des différentes notations associées,

- la figure 2 montre un véhicule se garant dans une place libre en une seule manoeuvre,

- les figures 3 et 4 montrent des étapes de réalisation de manoeuvres selon la présente invention,

- la figure 5 est un organigramme représentant la stratégie de parking selon l'invention.

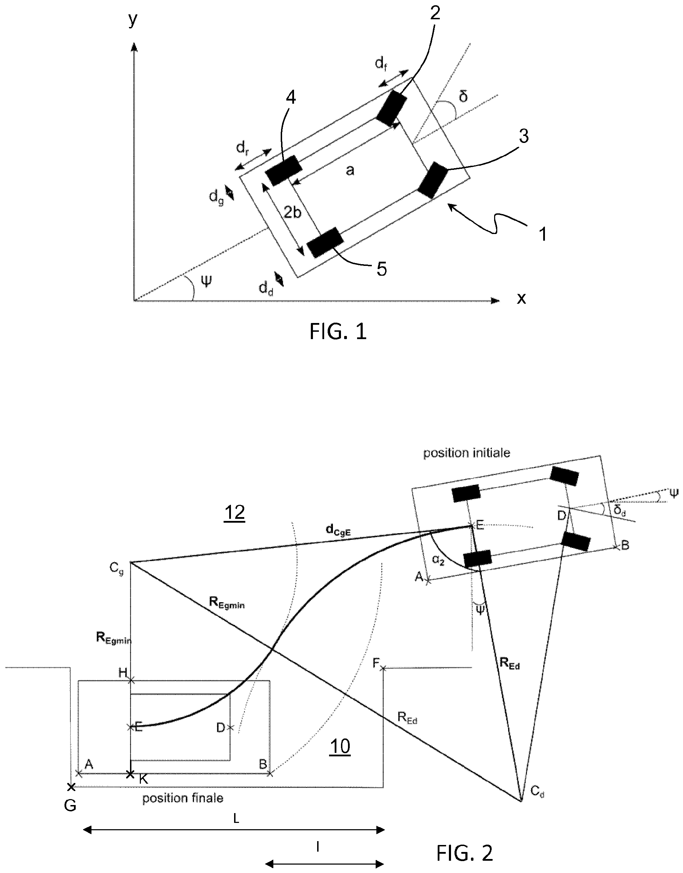

La présente invention se rapporte aux manoeuvres en créneau permettant de garer un véhicule le long d'une voie de circulation. Le véhicule pris comme exemple d'application de l'invention, tel que présenté figure 1, est un véhicule de type automobile, à traction, entraîné par un moteur (non représenté), comportant quatre roues 2 à 5 (roue avant gauche 2, roue avant droite 3, roue arrière gauche 4 et roue arrière droite 5), les roues avant étant les roues directrices.

Les caractéristiques de dimensionnement du véhicule sont nécessaires pour les différents calculs de trajectoire. On définit ainsi :

- $a$ : l'empattement du véhicule

- $2b$ : la voie du véhicule,

- $d_f$ : Porte à faux avant du véhicule

- $d_r$ : Porte à faux arrière du véhicule

- $d_g$ : Distance entre les roues gauches et le côté gauche du véhicule

- $d_d$ : Distance entre les roues droites et le côté droit du véhicule

- $\delta$ : Angle que font les roues avant avec l'axe longitudinal du véhicule, $\delta_g$ et $\delta_d$ désignent respectivement $\delta$ lorsque le véhicule braque à gauche ou à droite

- $v$ : Vitesse longitudinale du véhicule

- $\psi$ : Angle de cap du véhicule dans un repère absolu $(x, y)$

Le véhicule est ainsi schématisé comme un rectangle où les points J, A et B définissent respectivement les coins arrière gauche, arrière droit et avant droit du véhicule, en référence à la figure 2. On définit également les points D et E, qui sont, respectivement, les points milieu de l'essieu avant et de l'essieu arrière. Les centres instantanés de rotation du véhicule sont notés $C_g$ ou $C_d$, selon que les roues du véhicule sont braquées à gauche ou à droite. On définit également le point H comme l'intersection entre le côté gauche de la voiture et la droite reliant $C_g$ à E, et le point K comme l'intersection entre le côté droit de la voiture et la droite reliant Cg à E.

La trajectoire que le véhicule doit suivre pour se garer prend en compte les contraintes du véhicule (notamment les dimensions, angles de braquage maximaux) et les contraintes de l'environnement (dimensions de la place de parking, non collision avec les autres véhicules garés lors des manoeuvres).

Selon l'invention, la stratégie proposée consiste à inverser la ou les manoeuvres de sortie de parking. On considère ainsi le véhicule comme garé, tel que présenté à la figure 2, dans une place de parking 10, schématisée par un emplacement vide rectangulaire, de longueur L, encadré, longitudinalement, de part et d'autre, par des zones occupées, soit par des véhicules, soit par du mobilier urbain, soit par des zones d'interdiction de stationnement, ladite place de parking possédant un bord ouvert sur la chaussée, ou voie de circulation 12.

Les différentes manoeuvres, basées essentiellement sur des arcs de cercle au rayon de braquage maximal, sont définies pour permettre la sortie du véhicule de ladite place et pour l'amener jusqu'à la position initiale réelle du véhicule, les différentes manoeuvres étant ensuite reprises en ordre inverse pour permettre au véhicule de se garer.

Par manoeuvre, on entend une séquence de différents braquages de roues sans changement de signe de la vitesse du véhicule.

Dans le cas le plus simple où la place est suffisamment grande (essentiellement par la longueur, mais également par la largeur) pour que le véhicule puisse sortir en une manoeuvre, il suffit de braquer le véhicule au maximum vers le côté de sortie de la place de parking en avançant jusqu'à ce que l'avant du véhicule soit sorti de la place (manoeuvre $M_2$) puis de braquer dans l'autre sens pour se positionner sur la chaussée (manoeuvre $M_1$). Ce braquage n'est pas forcément réalisé au maximum de braquage des roues avant, car il dépend de paramètres tel que la largeur de la voie, les conditions de sortie, le positionnement du véhicule garé immédiatement devant le véhicule, la position initiale réelle du véhicule,....

Ainsi, lors des manoeuvres de parking, la manoeuvre $M_1$ sera réalisée en premier, puis la manoeuvre $M_2$ ensuite afin d'amener le véhicule dans la place de parking.

Selon la figure 2, la longueur de la place de parking est noté L et la différence entre cette valeur et la longueur du véhicule (égale à $a + d_f + d_r$) est noté I.

Le véhicule doit donc sortir par la gauche en braquant les roues au maximum à gauche. On notera $R_{Egmin}$ la longueur entre le point E et le point $C_g$ lorsque les roues sont braquées au maximum à gauche. Durant cette manoeuvre, le point E décrit donc l'arc de cercle de centre $C_g$ et de rayon $R_{Egmin}$. De même le point B décrit l'arc de cercle de centre $C_g$ et de rayon $R_{Bgmin}$. La figure 2 montre bien que la manoeuvre est possible, puisque cet arc de cercle n'interfère pas avec le coin haut droit de la place de parking, noté F, qui peut représenter le coin arrière gauche d'un véhicule garé immédiatement devant la place libre.

En supposant que les manoeuvres sont réalisées à basse vitesse, le mouvement du véhicule se réalise sans glissement. L'arc de cercle du point E, autour du centre instantané de rotation $C_g$, noté $R_{Eg}$, est donné par la formule : $R_{Eg} = a/\tan \delta_g$. De manière similaire, l'arc de cercle du point D, autour du centre instantané de rotation $C_g$, noté $R_{Dg}$, est donné par la formule : $R_{Dg} = a/\sin \delta_g$.

La sortie de la place de parking en une manoeuvre est possible si le rayon $R_{Bgmin}$ est inférieur à la distance du point $C_g$ au point F, noté $d_{CgF}$.

D'une manière générale, la distance entre le point $C_g$ et le point B, notée $R_{Bg}$, est donnée par la relation :

$$R_{Bg} = \sqrt{R_{Kg}^2 + d_{KB}^2}$$ d'après le théorème de Pythagore, où $d_{KB}$ est la distance entre les points K et B et $R_{Kg}$ est la distance entre $C_g$ et K. Les configurations géométriques donnent par ailleurs les relations suivantes :

$$d_{KB} = a + d_f$$

$$R_{Kg} = R_{Eg} + b + d_d$$

Par ailleurs, le véhicule est considéré comme garé s'il ne « déborde » pas sur la voie de circulation. En se reportant à la figure 2, le véhicule est considéré comme garé si la cote du point H selon l'axe y du référentiel absolu, noté $y_H$ est inférieure à la cote du point F selon ce même axe, notée $y_F$.

Pour déterminer la longueur minimale $L_{min}$ de la place de parking tel qu'il soit possible de se garer en une manoeuvre, on considère donc la condition limite $y_H = y_F$. On considère de plus que la voiture se gare parallèlement à la place de parking, de sorte que le triangle $C_g$-H-F soit rectangle en H. L'abscisse du centre $C_g$, noté $x_G$, peut être définie, lorsque le véhicule est considéré comme garé, par la formule $x_G = x_H - d_r$, où $X_H$ est l'abscisse du point H, dans le repère absolu.

Il s'ensuit que la longueur minimale de la place est définie par la formule :

$$L_{min} = d_r + \sqrt{R_{Bgmin}^2 - \left(\frac{a}{\tan\delta_g} - b - d_g\right)^2}$$

Dans le cas où $L_{min} \leq L$, le véhicule peut sortir ou entrer dans la place de parking en une seule manoeuvre, puisque le point B parcourt un arc de cercle de centre $C_g$ et de rayon $R_{Bgmin}$. Sur la figure 2 est représenté le trajet en trait gras du point E, parcourant un arc de cercle de centre $C_g$ et de rayon $R_{Egmin}$, avec la relation suivante :

$$R_{Eg\,min} = \frac{a}{\tan(\delta_{g\,max})}$$ , $\delta_{gmax}$ étant l'angle de braquage à gauche maximal.

La sortie finale de la place de parking est alors obtenue par un braquage des roues à droite, qui définit une rotation du véhicule autour du centre instantané de rotation droite $C_d$, le point E décrivant, autour de ce point, un arc de cercle de rayon $R_{Ed}$.

Pour que la manoeuvre soit réalisable, il faut que cet arc de cercle n'ait qu'un unique point d'intersection avec l'arc de cercle de centre $C_g$ et de rayon $R_{Bgmin}$ défini précédemment.

La position de $C_g$ est définie par $x_{Cg} = x_E$ et $y_{Cg} = y_E + R_{Egmin}$. Ceci permet de calculer la distance entre la position initiale de E et le point $C_g$, notée $d_{ECg}$.

De plus, même si on ne connait pas la position de $C_d$ ni la longueur $R_{Ed}$, on sait que $d_{CdCg} = R_{Egmin} + R_{Ed}$ et que les droites (E-Cd) et (E-D) sont perpendiculaires. Connaissant l'orientation initiales $\psi$ du véhicule on peut donc déduire l'angle $C_g\hat{E}C_d$, noté $\alpha_2$.

On trouve alors en appliquant le théorème d'Al-Kashi :

$$R_{Ed} = \frac{d_{ECg}^2 - R_{Egmin}^2}{2R_{Egmin} + 2d_{ECg}\cos\alpha_2}$$

Ce qui permet de déduire $\delta_d$ :

$$\delta_d = \arctan\frac{a}{R_{Ed}}$$

Afin d'éviter une collision entre le point A et la paroi droite du parking, en l'occurrence le point F (et donc d'éviter la collision du véhicule avec la paroi droite), il faut que la distance entre $C_d$ et A, notée $R_{Ad}$ soit supérieure à la distance entre $C_d$ et F, notée $d_{CdF}$. Or cette condition est vérifiée par le fait que l'angle de braquage $\delta_g$ permet de sortir sans collision.

Pour que le véhicule soit capable de suivre l'arc de cercle de centre $C_d$ et de rayon $R_{Ed}$, il faut, dans le cas limite, que $R_{Ed} = R_{Edmin} = a / \tan(\delta_{max})$. Or $R_{Edmin}$ est défini par la relation :

$$R_{Edmin} = \frac{d_{ECgmin}^2 - R_{Egmin}^2}{2R_{Egmin} + 2d_{ECgmin}\cos\alpha_2}$$

D'où l'on déduit que :

$$d_{ECgmin} = R_{Edmin}\cos\alpha_2 + \sqrt{R_{Edmin}^2\cos\alpha_2^2 + R_{Egmin} + 2R_{Edmin}R_{Egmin}}$$

Ainsi si $d_{ECg} < d_{ECgmin}$ il suffit que le véhicule se déplace jusqu'à satisfaire $d_{Ecg} \geq d_{ECgmin}$ puis la manoeuvre de parking peut commencer.

Dans le cas où la longueur du parking ne permet pas de garer le véhicule en une seule manoeuvre, les différentes manoeuvres sont basées sur le principe suivant : le véhicule est amené à la position parallèle au parking la plus proche et qui permet de sortir en un coup. Les arcs de cercle à suivre lors de cette étape sont calculés de la même manière que décrit précédemment pour le parking en une seule manoeuvre. Ensuite le véhicule est déplacé par des allers-retours entre les délimitations avant et arrière de la place de manière à être toujours parallèle au parking au début et à la fin de chaque aller-retour, tout en déplaçant le véhicule en y, jusqu'à ce que l'ordonnée $y_E$ du point E soit inférieure ou égale à l'ordonnée $y_F$ du point F : dans ce cas on peut considérer le véhicule comme étant garé correctement, sans dépassement sur la chaussée. Si on veut que le véhicule soit garé le plus près possible du trottoir, on cherchera à ce que l'ordonnée d point A se rapproche le plus possible de celle du bord bas du parking.

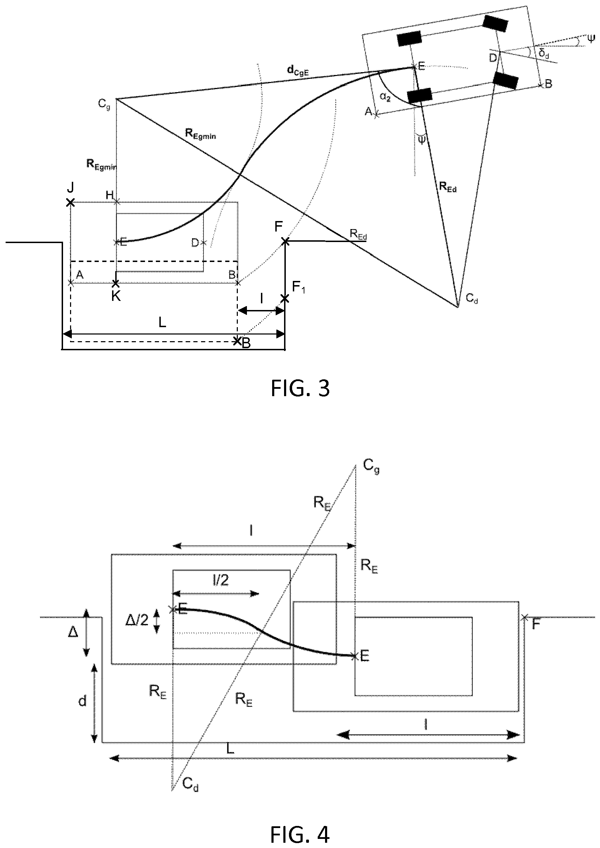

Ainsi, la figure 3 présente un tel cas, où la longueur L de la place de parking ne permet pas le parking en une seule manoeuvre. Le véhicule 1 est alors amené d'une position initiale à une position intermédiaire de la façon décrite précédemment, où la distance entre $C_g$ et F est égale à la distance entre $C_g$ et B.

Dans cette position intermédiaire, le véhicule se trouve à une distance d de la place de parking. Cette distance peut être envisagée de manière différente en fonction de la position finale souhaitée. Si on veut que le véhicule soit garé sans débordement de la chaussée, $d = y_H - y_F$ avec $y_H$ considéré lorsque le véhicule se trouve dans la position intermédiaire. Si on veut que le véhicule soit garé le plus près du trottoir, $d = y_B - y_G$ avec $y_B$ considéré lorsque le véhicule se trouve dans la position intermédiaire. La figure 4 illustre d dans cette dernière configuration. D'autres positions finales peuvent être envisagées. De manière générale, soit $(x_{Efinal}, y_{Efinal})$ la position finale souhaitée du point E, avec le véhicule parallèle au parking, alors $d = x_E - x_{Efinal}$, avec $x_E$ considéré lorsque le véhicule se trouve dans la position intermédiaire.

On ne connait a priori pas cette position intermédiaire du véhicule. Elle se déduit en fonction de la position finale du véhicule et de la distance d. Il faut donc calculer d. Pour cela on imagine que le véhicule est garé dans la position finale désirée et qu'il essaye de sortir de la place de parking en braquant les roues au maximum vers la gauche. Dans ce cas le point B décrit un cercle de centre $C_{Bg}$ et de rayon $R_{Bgmin}$. Comme le véhicule ne peut pas sortir en une seule manoeuvre, ce cercle intersecte la paroi droite du parking en un point $F_1$ (voir figure 3). Dans ces conditions, $y_{F1}$ est facilement calculable et on en déduit $e = y_F - y_{F1}$. Or si on translate le véhicule de la position finale souhaite de la distance e selon l'axe des ordonnées, alors en braquant les roues au maximum vers la gauche, le cercle décrit par le point B intersecte la paroi droite du parking au point F. Il s'agit de la condition limite de non collision avec le parking et de sortie en une seule manoeuvre. On en déduit d = e.

La figure 4 illustre les différentes manoeuvres depuis la position intermédiaire. Afin de faciliter la compréhension, la longueur de la place a été volontairement agrandie, et une seule manoeuvre est représentée.

Le véhicule est ainsi représenté dans un déplacement vers l'avant. Pendant que le véhicule parcourt la longueur l/2, le braquage se fait à droite, puis pendant la longueur l/2 restante le braquage se fait à gauche. Pour être toujours parallèle au parking à la fin de la manoeuvre et maximiser le déplacement latéral, afin de simplifier les calculs l'angle de braquage est considéré comme identique à droite comme à gauche, et est égal à la valeur minimale entre les valeurs maximales d'angle de braquage à droite et de braquage à gauche. On notera cet angle $\delta$. Le rayon de braquage du point E, noté $R_E$, à droite, comme à gauche est défini par la relation : $R_E = a / \tan \delta$.

Il est alors possible de calculer le déplacement latéral $\Delta$ du véhicule lors d'un aller-retour par la formule :

$$\Delta = 2(R_E - \sqrt{R_E{}^2 - \frac{l^2}{4}})$$

Le nombre d'aller-retour $nb_{a\text{-}r}$ pour passer de la position intermédiaire à la position finale garée est alors donnée par la formule :

$$nb_{a-r} = PartieEntiere(\frac{d}{\Delta}) + 1$$

En comptant la première manoeuvre amenant le véhicule à la position intermédiaire, le nombre total de manoeuvre nbm est alors $nbm = nb_{a\text{-}r} + 1$.

Selon une mise en oeuvre particulièrement intéressante de l'invention, cette stratégie de parking est mise en oeuvre automatiquement après acceptation par le conducteur des différentes manoeuvres à réaliser.

Une telle réalisation automatique nécessite que le véhicule soit équipé de différents systèmes automatiques pour commander le braquage des roues, l'accélération, le freinage, le changement de vitesse, notamment pour changer la direction d'avancement du véhicule. Il doit en outre être équipé d' un ou plusieurs capteurs permettant de mesurer au moins la longueur de la place de parking lorsqu'on passe à côté d'elle, par exemple un capteur ultra-son, un radar ou une caméra. Dans le cas où les capteurs présents ne permettent pas de mesurer la profondeur de la place de parking, le véhicule doit être pourvu d'un système permettant de déduire que l'emplacement est bien un emplacement de parking (ex : caméra avec détection de véhicules adjacents, interface utilisateur avec question de possibilité de parking,...). Le véhicule doit également comporter un ou plusieurs capteurs permettant de mesurer les distances depuis l'avant et l'arrière du véhicule jusqu'à l'obstacle le plus proche (ex : mur, véhicule de derrière), par exemple caméra, capteur ultra-son ou télémètre laser.

Un calculateur permet de gérer et stocker ces différentes informations pour réaliser les différentes étapes de calcul mentionnées précédemment.

Afin de rendre compte des possibilités de parking au conducteur, le véhicule sera préférentiellement équipé d'une interface graphique ou vocale.

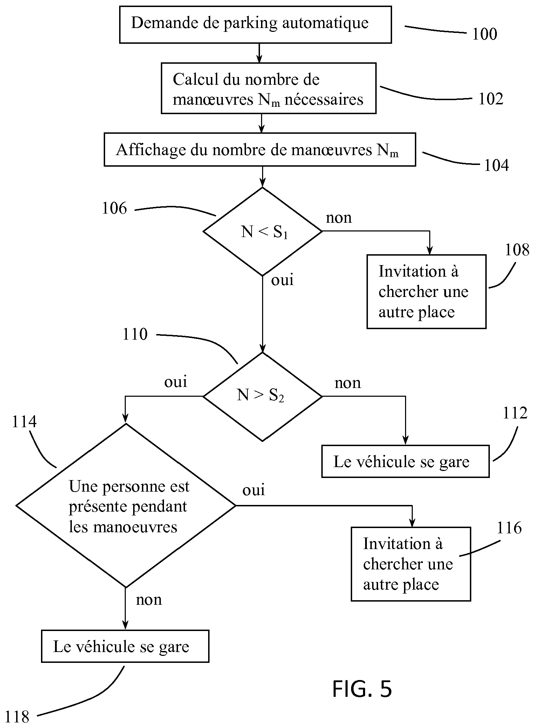

La figure 5 présente un organigramme d'une stratégie possible de parking selon l'invention.

Ainsi, lors d'une étape 100, après avoir repéré une place de parking libre, le conducteur sélectionne, par une interface appropriée, une demande de parking à droite ou à gauche, soit par un bouton approprié soit par l'indication de son clignotant. Il passe ensuite devant la place libre afin que les capteurs du véhicule, associés au calculateur permettent de déterminer les caractéristiques de la place libre.

Lors d'une étape 102, conformément à la description qui vient d'être faite, le nombre $N_m$ de manoeuvres est calculé, puis affiché dans une étape 104. Si le nombre de manoeuvre est trop élevé, c'est-à-dire supérieur à un seuil $S_1$ fixé par avance, alors l'interface graphique invite le conducteur, dans une étape 108, à chercher une autre place. Le seuil $S_1$ peut, par exemple être fixé à 10.

Si ce seuil n'est pas dépassé, il est regardé si le nombre de manoeuvre est supérieur à un second seuil $S_2$, inférieur donc au premier seuil. Si ce second seuil n'est pas atteint, le véhicule commence la ou les manoeuvre(s) pour se garer lors d'une étape 112. Le seuil $S_2$ peut être fixé à 5.

Si ce seuil est atteint, l'interface demande au conducteur si une personne va être présente dans le véhicule lors des manoeuvres. En effet, le nombre de manoeuvres étant assez fastidieux, les manoeuvres seront considérées comme acceptables si le véhicule n'est pas occupé, ce qui évitera de bloquer un passager ou un conducteur le temps des manoeuvres. Cette option n'est pas proposée lorsque le seuil $S_1$ est franchi, car il est considéré alors que la monopolisation ou l'encombrement de la voie par le véhicule lors des manoeuvres de stationnement n'est pas acceptable pour la collectivité.

Ainsi, s'il est répondu qu'aucune personne ne sera présente lors des manoeuvres, alors le véhicule commence les manoeuvres pour se garer lors d'une étape 118. Sinon, l'interface graphique invite le conducteur à chercher une autre place dans une étape 116.

Il est possible de laisser la possibilité au conducteur de forcer la réalisation des manoeuvres de parking, lorsque le seuil $S_2$ est dépassé, avec la présence d'une personne lors des manoeuvres.

La présente invention trouve également son application dans une version plus simple de réalisation où les commandes d'accélération, de freinage et de changement de direction sont réalisées par le conducteur, l'interface utilisateur indiquant simplement le nombre de manoeuvres à effectuer, le cas échéant, l'impossibilité de se garer, et invitant le conducteur à réaliser ou non ces manoeuvres.

**Revendications**

1. Procédé d'aide au parking d'un véhicule (1) depuis une voie de circulation (12) vers un emplacement libre de parking (10), par une ou des manoeuvres de type créneau, comprenant les étapes suivantes :

   - détermination de la longueur (L) de l'emplacement libre (10),
   - détermination d'une trajectoire optimale de déplacement du véhicule (1) par des arcs de cercle successifs,

   **caractérisé en ce qu'**il comporte une étape de détermination du nombre de manoeuvres $N_m$ nécessaires pour amener le véhicule (1) dans la place de parking (10) et **en ce que** ces manoeuvres sont mises en oeuvre lorsque ce nombre de manoeuvres $N_m$ est inférieur à un seuil $S_2$, ce seuil étant augmenté lorsqu'aucun occupant du véhicule n'est présent à l'intérieur du véhicule lors des manoeuvres.

2. Procédé selon la revendication 1, comprenant une étape d'information au conducteur du nombre de manoeuvres à réaliser, ainsi qu'une étape de validation par le conducteur dudit nombre de manoeuvres à effectuer, les manoeuvres étant mises en oeuvre après la validation par le conducteur.

3. Procédé selon l'une des revendications précédentes, **caractérisé en ce que** la première manoeuvre consiste en un premier arc de cercle amenant le véhicule (1) à l'intérieur de l'emplacement libre (10) et en un deuxième arc de cercle ramenant le véhicule (1) parallèle avec un angle de braquage maximal.

4. Procédé selon la revendication précédente, **caractérisé en ce que** les manoeuvres ultérieures consistent en des allers-retours d'un bord à l'autre de l'emplacement libre (10), le véhicule (1) étant dirigé vers l'intérieur de l'emplacement libre (10) sur une première partie du trajet puis ramené parallèlement à l'emplacement libre sur une seconde partie du trajet.

**Patentansprüche**

1. Verfahren zur Einparkhilfe eines Fahrzeugs (1) von einer Fahrbahn (12) in eine Parklücke (10) durch ein oder mehrere Manöver des parallelen Einparkens, die folgenden Schritte umfassend:

   - Bestimmung der Länge (L) der Parklücke (10),
   - Bestimmung einer optimalen Trajektorie der Bewegung des Fahrzeugs (1) durch aufeinander folgende Kreisbögen,

   **dadurch gekennzeichnet, dass** es einen Schritt der Bestimmung der Anzahl der Manöver $N_m$ umfasst, die erforderlich sind, um das Fahrzeug (1) in die Parklücke (10) einzuparken, und dadurch, dass diese Manöver durchgeführt werden, wenn diese Anzahl von Manövern $N_m$ kleiner als ein Schwellenwert $S_2$ ist, wobei dieser Schwellenwert erhöht wird, wenn sich während der Manöver kein Fahrzeuginsasse im Inneren des Fahrzeugs befindet.

2. Verfahren nach Anspruch 1, welches einen Schritt der Übermittlung einer Information über die Anzahl durchzuführender Manöver an den Fahrer sowie einen Schritt der Validierung der Anzahl durchzuführender Manöver durch den Fahrer umfasst, wobei die Manöver nach der Validierung durch den Fahrer durchgeführt werden.

3. Verfahren nach einem der vorhergehenden Ansprüche, **dadurch gekennzeichnet, dass** das erste Manöver in einem ersten Kreisbogen besteht, der das Fahrzeug (1) in die Parklücke (10) hineinbringt, und in einem zweiten Kreisbogen, der das Fahrzeug (1) mit einem maximalen Einschlagwinkel wieder parallel ausrichtet.

4. Verfahren nach dem vorhergehenden Anspruch, **dadurch gekennzeichnet, dass** die weiteren Manöver in Vor- und Zurückbewegungen von einem Rand der Parklücke (10) zum anderen bestehen, wobei das Fahrzeug (1) auf einem ersten Teil des Weges in die Parklücke (10) hineingelenkt wird und danach auf einem zweiten Teil des Weges wieder parallel zu der Parklücke ausgerichtet wird.

**Claims**

1. Method for assistance in the parking of a vehicle (1) from a roadway (12) into a free parking space (10), by one or more maneuvers of the slot parking type, comprising the following steps:

   - determination of the length (L) of the free parking space (10),
   - determination of an optimum path to be followed by the movement of the vehicle (1) by successive arcs of a circle,

   **characterized in that** it comprises a step for determining the number of maneuvers $N_m$ needed in order to bring the vehicle (1) into the parking space (10) and **in that** these maneuvers are implemented when this number of maneuvers $N_m$ is less than a threshold $S_2$, this threshold being increased when no occupant of the vehicle is present inside of the vehicle during the maneuvers.

2. Method according to Claim 1, comprising a step for informing the driver of the number of maneuvers to be carried out, together with a step for validation by the driver of said number of maneuvers to be carried out, the maneuvers being implemented after the validation by the driver.

3. Method according to either of the preceding claims, **characterized in that** the first maneuver consists of a first arc of a circle bringing the vehicle (1) inside of the free parking space (10) and of a second arc of a circle bringing the vehicle (1) parallel with a maximum steering angle.

4. Method according to the preceding claim, **characterized in that** the later maneuvers consist of back and forth movements from one side to the other of the free parking space (10), the vehicle (1) being directed toward the interior of the free parking space (10) over a first part of the path, then brought back parallel to the free parking space over a second part of the path.

FIG. 1

FIG. 2

FIG. 3

FIG. 4

Demande de parking automatique — 100

Calcul du nombre de manœuvres $N_m$ nécessaires — 102

Affichage du nombre de manœuvres $N_m$ — 104

106 — $N < S_1$

non

Invitation à chercher une autre place — 108

oui

110 — $N > S_2$

oui

non

Le véhicule se gare — 112

114 — Une personne est présente pendant les manoeuvres

oui

Invitation à chercher une autre place — 116

non

Le véhicule se gare

118

FIG. 5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20090260907 A

- US 2010332080 A